# EUROPÄISCHE PATENTSCHRIFT

(11) **EP 2 571 701 B1**
(45) Veröffentlichungstag und Bekanntmachung des Hinweises auf die Patenterteilung: **01.04.2015**
(21) Anmeldenummer: 11720452.9
(22) Anmeldetag: 17.05.2011
(51) Int. Cl.: B60C 29/02, B60C 29/06, B60B 25/00, B60B 25/22

(54) **ANORDNUNG EINER AN DER INNENSEITE EINES FELGENBETTES EINER RADFELGE BEFESTIGTEN HALTERUNG**
ARRANGEMENT OF A MOUNTING SECURED TO THE INSIDE OF A RIM WELL OF A WHEEL RIM
AGENCEMENT D'UN SUPPORT FIXÉ SUR LE CÔTÉ INTÉRIEUR D'UNE EMBASE D'UNE JANTE DE ROUE

(30) Priorität: 19.05.2010 DE 102010020948
(43) Veröffentlichungstag der Anmeldung: 27.03.2013
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE)
(74) Vertreter: Mattusch, Gundula
(86) Internationale Anmeldenummer: PCT/EP2011/057952
(87) Internationale Veröffentlichungsnummer: WO 2011/144600

(56) Entgegenhaltungen:
- DE-U1- 8 534 214
- DE-U1- 9 302 971
- US-A- 1 624 974
- US-A- 3 064 705
- US-A- 3 939 894

## Beschreibung

Die Erfindung betrifft eine Anordnung einer an der Innenseite eines Felgenbettes einer Radfelge befestigten Halterung nach dem Oberbegriff des Anspruchs 1.

Der umfänglich im Wesentlichen durch das Felgenbett begrenzte Innenraum einer Radfelge, insbesondere eines Nutzfahrzeuges, dient der Aufnahme einer Scheibenbremse. Dabei wird angestrebt, die Scheibenbremse möglichst weit axial in die Radfelge eintauchen zu können, um nicht mit Fahrzeugteilen wie dem Chassis, der Federung oder Achsaufhängung zu kollidieren.

Insbesondere bei Verwendung eines Reifens mit innen liegendem Schlauch wird das Reifenfüllventil etwa mittig durch das Felgenbett geführt und erstreckt sich im Weiteren axial an der Innenseite des Felgenbettes hin bis in den Bereich einer Felgenschüssel, die eine Befüllöffnung aufweist.

Um den vorhandenen Innenraum der Felge optimal zu nutzen, ist es bekannt, das in ungesicherter Position gegenüber der Felgenachse geneigt verlaufende Reifenfüllventil durch eine Halterung an der Innenseite des Felgenbettes anzulegen, wobei diese Halterung als angeschweißte Lasche ausgebildet ist. Dabei überspannt die Lasche einen die Wandung des Felgenbettes durchbrechenden Schlitz, durch den das Reifenfüllventil zur Montage gesteckt wird.

Naturgemäß ist diese Art der Anbringung der Halterung mit erheblichen fertigungstechnischen, aber auch funktionalen Nachteilen behaftet. Vor allem ist das genannte Anschweißen nur mit einem erheblichen Fertigungsaufwand möglich, der einer angestrebten Kostenoptimierung entgegensteht, die insofern besonders wünschenswert ist, da Radfelgen als Serienteile in großen Stückzahlen hergestellt werden.

Eine gattungsgemäße Anordnung ist aus der US 1 624 974 A bekannt. Danach ist die Halterung mit dem Felgenbett vernietet, wozu entsprechende vorbereitende Arbeiten erforderlich sind. Eine Befestigung der Halterung bei eingelegtem Schlauch ist nicht möglich.

Die DE 85 34 214.9 U1 offenbart eine Anordnung einer Halterung am Felgenbett einer Radfelge, bei der das Radfüllventil in die aus Gummi oder einem gummielastischen Material bestehende Halterung eingebettet ist. Hier besteht die Halterung also aus einem Vollmaterial.

Mit dieser Konstruktion wird die Möglichkeit geschaffen, eine Radfelge für einen Schlauchreifen auch für den Einsatz eines schlauchlosen Reifens zu verwenden.

Der Erfindung liegt die Aufgabe zugrunde, eine Anordnung der gattungsgemäßen Art so weiterzuentwickeln, dass ihre Verwendungsfähigkeit mit geringstmöglichem Fertigungs- und Montageaufwand verbessert wird.

Diese Aufgabe wird durch eine Anordnung mit den Merkmalen des Anspruchs 1 gelöst.

Durch die erfindungsgemäß vorgesehene formschlüssige Anbringung der Halterung am Felgenbett sind entsprechende Fertigungsmaßnahmen zur Herstellung einer stoffschlüssigen Verbindung, wie zum Stand der Technik beschrieben, nicht mehr erforderlich. Auf Schweißarbeiten kann vollständig verzichtet werden, wobei Beeinträchtigungen, die sich dabei aufgrund der Wärmeeinwirkung bezüglich einer Gefügeveränderung des Felgenbettmaterials ergeben, nicht mehr auftreten.

Die Halterung wird formschlüssig in dem Schlitz gehalten, wozu Anschlaglaschen angeformt sind, die nach einem Einsetzen der Halterung in den Schlitz quasi rückseitig am Felgenbett anliegen, so dass die Halterung sicher gehalten wird.

Nach einem weiteren Gedanken der Erfindung ist vorgesehen, die Halterung aus einem elastischen Material herzustellen, vorzugsweise aus einem Federblech, insbesondere aus rostfreiem Stahl.

Dabei ist die Halterung so dimensioniert, dass sie das Reifenfüllventil weitgehend überdeckt, so dass die Halterung eine Abschirmung gegen Wärmestrahlung bildet, wie sie als Reibwärme beim Abbremsen entsteht.

Da das Reifenfüllventil im Sinne eines Schlauches üblicherweise aus Kunststoff, insbesondere einem Elastomer besteht, wird damit die Gefahr einer Beschädigung durch Wärmeeinwirkung zumindest verringert.

Durch die gegenüber dem Innenraum der Felge praktisch vollständige Überdeckung des Reifenfüllventils durch die Halterung wird neben der thermischen Abschirmung auch eine Abschirmung gegenüber mechanischen Beanspruchungen, wie Steinschlag oder dergleichen erreicht, so dass das Reifenfüllventil gegen äußere Einwirkungen vollständig gekapselt ist.

Die neue Halterung lässt sich des Weiteren sehr einfach montieren. Dazu werden die beiden parallel und abständig zueinander angeordneten Schenkel der im Querschnitt U-förmig ausgebildeten Halterung zusammengedrückt und bei drucklosem Schlauch in den Schlitz geschoben. Durch die Rückstellkräfte des elastischen Materials werden die beiden Schenkel gespreizt, wobei dann die Anschlaglaschen zur Anlage an der Außenseite des Felgenbettes kommen, während die Schenkel mit einem gewissen Anpressdruck an der Wandung des Schlitzes anliegen.

Zur axialen Sicherung der Halterung sind die Anschlaglaschen so dimensioniert bzw. positioniert, dass sie in einer Konturierung der Außenfläche des Felgenbettes einliegen.

Um zu verhindern, dass bei der Montage die Halterung vollständig in den Schlitz eingeschoben wird, sind Vorsprünge an der Halterung vorgesehen, die außerhalb des Schlitzes am Felgenbett bzw. an einem Teil einer angeschlossenen Felgenschüssel anliegen.

Der nach einer Montage mit Luft befüllte Schlauch des Reifens drückt die Anschlaglaschen gegen das Felgenbett, so dass eine sichere Positionierung gewährleistet ist.

Die Erfindung ermöglicht überdies - siehe Anspruch 7 - eine problemlose Nachrüstung der Radfelge mit einer Halterung bei bereits montiertem Reifen, wozu lediglich der Schlauch des Reifens entlüftet werden muss, so dass die Halterung in der vorbeschriebenen Weise in den Schlitz eingebracht werden kann. Entsprechend beschreibt Anspruch 8 diese Halterung auch als separates Ersatz und Neuteil.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer Radfelge in einer geschnittenen perspektivischen Ansicht
- Figur 2: einen Teilausschnitt der Radfelge in einer perspektivischen Draufsicht
- Figur 3: den Teilausschnitt der Radfelge in einer perspektivischen Unteransicht
- Figur 4: eine Einzelheit der Radfelge in einer perspektivischen Ansicht.

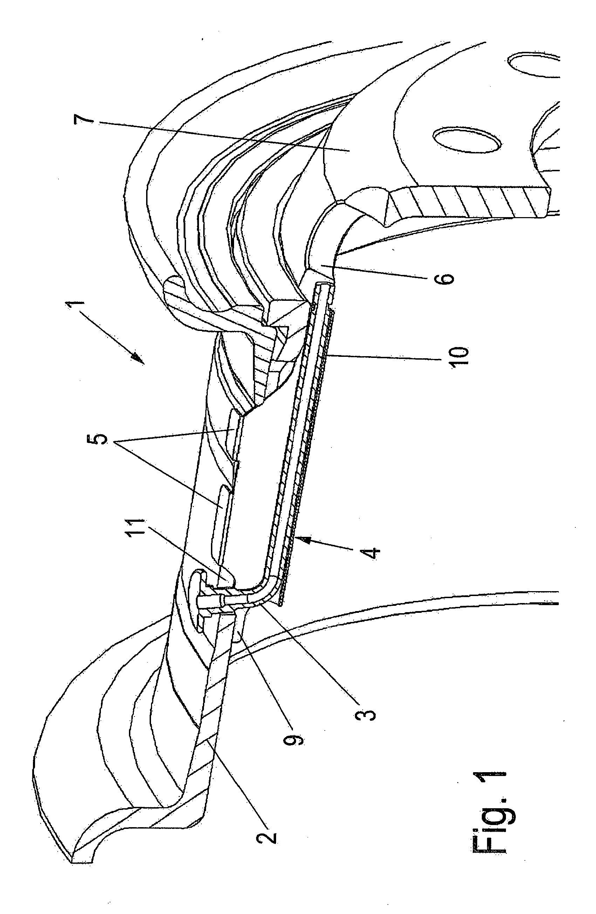

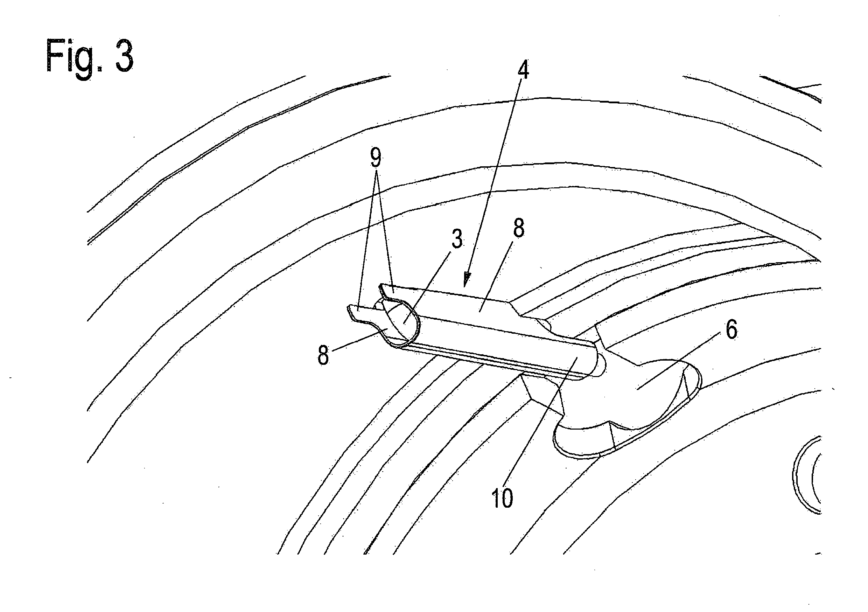

In den Figuren 1 bis 3 ist jeweils ein Teil einer Radfelge 1 dargestellt, mit einem Felgenbett 2, das von einem mit einem nicht gezeigten Schlauch eines Reifens verbundenen Reifenfüllventil 3 durchtreten ist, wobei dieses Reifenfüllventil 3 in axialer Richtung der Radfelge 1 gesehen etwa mittig durch das Felgenbett 2 geführt ist und sich im Wesentlichen axial an der Innenseite des Felgenbettes 2 erstreckt bis hin zu einer Befüllöffnung 6, über die ein Anschluss an einen Kompressor oder dergleichen mit dem Reifenfüllventil 3 verbindbar ist, wobei die Befüllöffnung 6 in einer mit dem Felgenbett 2 verbundenen Felgenschüssel vorgesehen ist.

An der Innenseite des Felgenbettes 2 ist eine Halterung 4 angeordnet, die erfindungsgemäß formschlüssig mit dem Felgenbett 2 verbunden ist und mit der das Reifenfüllventil 3 im Wesentlichen achsparallel zum Felgenbett 2 daran gehalten ist.

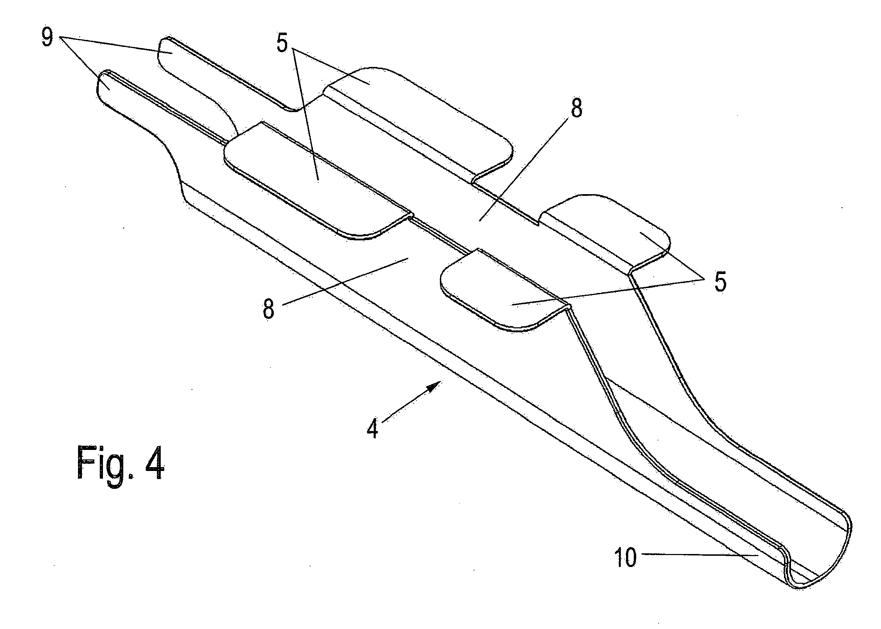

Wie insbesondere die Figur 4 sehr deutlich wiedergibt, in der die Halterung 4 als Einzelheit dargestellt ist, ist diese Halterung 4 als Rinne, im Querschnitt U-förmig ausgebildet, mit zwei parallel und abständig zueinander angeordneten Schenkeln 8, an deren freien Längsseiten jeweils Anschlaglaschen 5 entgegengesetzt abgewinkelt angeformt sind.

Die Halterung 4 ist formschlüssig in einem die Wandung des Felgenbettes 2 durchbrechenden Schlitz 11 gehalten, wobei die Halterung 4 das einliegende Reifenfüllventil 3 so weit überdeckt, dass zumindest in radialer Richtung, bezogen auf die Mittelachse der Radfelge 1, eine weitgehend vollständige Abschirmung gegeben ist.

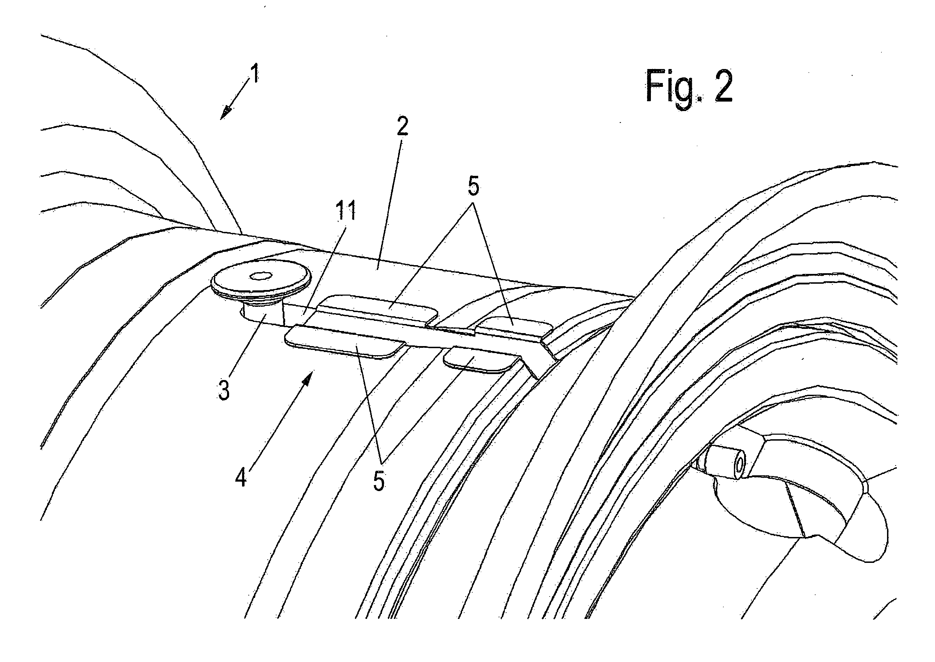

In den Figuren 1 und 2 ist erkennbar, dass die Anschlaglaschen 5 auf der dem Reifenfüllventil 3 gegenüberliegenden, die Außenfläche des Felgenbettes 2 bildenden konturierten Fläche aufliegen, wobei durch die Konturierung quasi eine Verschiebesicherung gebildet ist, da die Anschlaglaschen 5 in den vertieften Bereichen der Konturierung einliegen und der Verschiebeweg durch die sich an die Vertiefungen anschließenden Erhebungen begrenzt ist.

Zur Montage der Halterung 4 wird zunächst ein Schenkel 8 zuvorderst mit den angeschlossenen Anschlaglaschen 5 schräg durch den Schlitz 11 gesteckt, anschließend der zweite Schenkel 8 so weit zusammengedrückt, dass auch dieser, mit den Anschlaglaschen 5 voran in den Schlitz 11 geführt werden kann. Nach Erreichen einer Endstellung spreizen sich die Schenkel 8 aufgrund der dem elastischen Material, aus dem die Halterung 4 gefertigt ist, innewohnenden Rückstellkräfte bis die Schenkel 8 zur Anlage an den gegenüberliegenden Wandungen des Schlitzes 11 gelangen. Danach wird das Reifenfüllventil 3 über den Schlitz 11 eingesteckt und bis zur Befüllöffnung 6 geführt.

Zur Einschubbegrenzung der Halterung 4 in den Schlitz 11 weist diese an beiden Enden Vorsprünge 9, 10 auf, die über die Länge des Schlitzes 11 hinausragen und an der Innenseite des Felgenbettes 2 bzw. an einem daran angeschlossenen Bauteil anliegen.

Wie die Figur 4 deutlich zeigt, ist der Vorsprung 10 als Fortsetzung der rinnenförmigen Ausbildung gestaltet, während die Vorsprünge 9 im Sinne von Zungen an die Schenkel 8 angeformt sind.

## Patentansprüche

1. Anordnung an einer an der Innenseite eines Felgenbettes (2) einer einen Schlauch tragenden Radfelge (1) befestigten, rinnenförmigen und im Querschnitt U-förmigen Halterung (4) für ein sich im Wesentlichen axial erstreckendes, am Schlauch angeschlossenes Reifenfüllventil (3), wobei das Felgenbett (2) in einem vom Reifenfüllventil (3) zumindest teilweise überdeckten Bereich einen die Wandung durchbrechenden Schlitz (11) aufweist, **dadurch gekennzeichnet, dass** die Halterung (4) formschlüssig im Schlitz (11) befestigt ist, wobei an ihre beiden abständig zueinander angeordneten, mit Anpressdruck an der Wandung des Schlitzes (11) anliegenden Schenkel (8) abgewinkelte Anschlaglaschen (5) angeformt sind, die auf der Außenseite des Felgenbettes (2) aufliegen.

2. Anordnung nach Anspruch 1, **dadurch gekennzeichnet, dass** die Halterung (4) aus einem elastischen Material, insbesondere einem Federblech, vorzugsweise aus nichtrostendem Stahl, besteht.

3. Anordnung nach Anspruch 1 oder 2, **dadurch gekennzeichnet, dass** die Halterung (4) das Reifenfüllventil (3) in dessen Längserstreckung weitgehend überdeckt.

4. Anordnung nach einem der vorhergehenden Ansprüche, **dadurch gekennzeichnet, dass** die Anschlaglaschen (5) in Vertiefungen einer Oberflächenkonturierung der Außenfläche des Felgenbettes (2) einliegen.

5. Anordnung nach einem der vorhergehenden Ansprüche, **dadurch gekennzeichnet, dass** die Gesamtlänge der Halterung (4) größer ist als die Länge des Schlitzes (11).

6. Anordnung nach einem der vorhergehenden Ansprüche, **dadurch gekennzeichnet, dass** an die beiden Enden der Halterung (4) Vorsprünge (9, 10) angeformt sind, die an der Innenseite des Felgenbettes (2) oder daran angeschlossenen Teilen anliegen.

7. Anordnung nach einem der vorstehenden Ansprüche, **dadurch gekennzeichnet,** dass die Halterung (4) in bereits existierenden Felgen nachrüstbar ist.

8. Halterung (4) für eine Anordnung nach einem oder mehreren der vorstehenden Ansprüche, **dadurch gekennzeichnet, dass** die Halterung derart ausgebildet ist, dass sie formschlüssig in den Schlitz (11) des Felgenbettes einsetzbar ist.

## Claims

1. Structure of a channel-shaped mounting support (4) secured to the inside of a rim base (2) of a wheel rim (1) supporting a tube, which has a U-shaped cross-section and serves to support a tire inflation valve (3) extending substantially axially and connected to said tube, wherein said rim base (2) is provided with a slot (11) penetrating the wall in a zone which is covered, at least in parts, by said tire inflation valve (3), **characterised in** that said mounting support (4) is secured, in a form-locking manner, in said slot (11), with angled end stop lugs (5) being formed on its two legs (8) disposed at a distance from each other and bearing against the wall of said slot (11) with a closing pressure, which lugs rest on the outside of said rim base (2).

2. Structure according to Claim 1, **characterised in** that said mounting support (4) consists of an elastic material, in particular a metal spring plate, preferably made of stainless steel.

3. Structure according to Claim 1 or 2, **characterised in** that said mounting support (4) largely covers said tire-inflating valve (3) along its longitudinal extension.

4. Structure according to any of the preceding Claims, **characterised in** that said end stop lugs (5) are nested in recesses of a surface contour on the outside of said rim base (2).

5. Structure according to any of the preceding Claims, **characterised in** that the overall length of said mounting support (4) exceeds the length of said slot (11).

6. Structure according to any of the preceding Claims, **characterised in** that projections (9, 10) are formed on both ends of said mounting support (4), which bear against the inside of said rim base (23) or parts connected thereto.

7. Structure according to any of the preceding Claims, **characterised in** that said mounting support (4) is provided for retrofitting in rims already existing.

8. Mounting support (4) for a structure according to any of the preceding Claims, **characterised in** that said mounting support is so configured that it is suitable for form-locking insertion into said slot (11) of said rim base.

## Revendications

1. Arrangement d'un support (4) en forme de gouttière, fixé au côté intérieur d'une gorge de jante (2) d'une jante de roue (1) portant un pneu, qui est doté d'une coupe transversale en U et qui sert à porter une soupape de gonflage du pneu (3), qui s'étend essentiellement en sens axial et qui est relié audit pneu, dans lequel ladite gorge de jante (2) est munie d'une fente (11) traversant la paroi dans une zone, qui est recouverte, au moins en partie, par ladite soupape de gonflage du pneu (3), **caractérisé en ce** que ledit support (4) est fixé en forme dans ladite fente (11), aux languettes de butée coudées (5) étant formées à ses deux branches (8) écartées l'une de l'autre et portant contre la paroi de ladite fente (11) à une pression de fermeture, ces languettes s'appuyant sur le côté extérieur de ladite gorge de jante (2).

2. Arrangement selon la revendication 1, **caractérisé en ce** que ledit support (4) consiste en un matériau élastique, en particulier une tôle élastique, de préférence en acier inoxydable.

3. Arrangement selon la revendication 1 or 2, **caractérisé en ce** que ledit support (4) largement chevauche ladite soupape de gonflage du pneu (3) le long de l'étendue longitudinale.

4. Arrangement selon une quelconque des revendications précédentes, **caractérisé en ce** que lesdites languettes de butée (5) sont insérées dans des évidements d'un contour à la surface du côté extérieur de ladite gorge de jante (2).

5. Arrangement selon une quelconque des revendications précédentes, **caractérisé en ce** que la longueur totale dudit support (4) est plus grande que la longueur de ladite fente (11).

6. Arrangement selon une quelconque des revendications précédentes, **caractérisé en ce** que des saillies (9, 10) sont formées aux deux extrémités dudit support (4), qui portent contre le côté intérieur de ladite gorge de jante (23) ou des parties y reliées.

7. Arrangement selon une quelconque des revendications précédentes, **caractérisé en ce** que ledit support (4) est prévu pour un rééquipement dans des jantes existantes déjà.

8. Support (4) pour un arrangement selon une quelconque des revendications précédentes, **caractérisé en ce** que ledit support est configuré d'une telle façon, qu'il soit apte pour une insertion en forme dans ladite fente (11) de ladite gorge de jante.
